# EUROPÄISCHE PATENTANMELDUNG

(11) **EP 4 610 899 A1**
(43) Veröffentlichungstag der Anmeldung: **03.09.2025**
(21) Anmeldenummer: 24160212.7
(22) Anmeldetag: 28.02.2024
(51) Int. Cl.: G06N 20/00

(54) **AUFTEILUNG VON MESSDATEN-RECORDS AUF DIE PHASEN DES TRAININGS EINES MACHINE LEARNING-MODELLS**

(71) Anmelder: Robert Bosch GmbH, 70442 Stuttgart (DE)
(72) Erfinder: Kloppenburg, Ernst, 71254 Ditzingen (DE); Groh, Konrad, 70193 Stuttgart (DE)

(57) **Zusammenfassung**

Verfahren (100) zur Aufteilung einer vorgegebenen Menge von Messdaten-Records (2) für das Training eines Machine Learning-Modells (1) auf verschiedene vorgegebene Phasen (1a, 1b, 1c) dieses Trainings, wobei jeder Messdaten-Record (2) Werte einer oder mehrerer Messgrößen enthält, mit den Schritten:
• es wird eine Sequenz von Referenzpunkten (4), die einen Raum (3) der Messdaten-Records (2) abdecken und nicht mit Messdaten-Records (2) zusammenfallen, ermittelt (110);
• für ein oder mehrere Messdaten-Records (2) aus der vorgegebenen Menge von Messdaten-Records (2) wird mit einem vorgegebenen Distanzmaß (5) ermittelt (120), welchem Referenzpunkt (4) dieser Messdaten-Record (2) am nächsten liegt, und der Messdaten-Record (2) wird diesem Referenzpunkt (4) zugeordnet (130);
• die Referenzpunkte (4) werden auf die vorgegebenen Phasen (1a, 1b, 1c) des Trainings aufgeteilt (140), so dass jeder Phase (1a, 1b, 1c) des Trainings ein oder mehrere Referenzpunkte (4) zugeordnet werden;
• derjenigen Phase (1a, 1b, 1c) des Trainings, der jeder Referenzpunkt (4) zugeordnet ist, werden auch die diesem Referenzpunkt (4) zugeordneten Messdaten-Records (2) zugeordnet (150).

## Beschreibung

Die vorliegende Erfindung betrifft das Training von Machine Learning-Modellen, wie beispielsweise neuronalen Netzwerken, für die Auswertung von Messdaten, beispielsweise im Rahmen des zumindest teilweise automatisierten Führens von Fahrzeugen oder Robotern.

### Stand der Technik

Das zumindest teilweise automatisierte Führen von Fahrzeugen oder Robotern auf Betriebsgeländen oder im öffentlichen Verkehr setzt voraus, dass das Umfeld des Fahrzeugs bzw. Roboters ständig messtechnisch überwacht und die so gewonnenen Messdaten im Hinblick auf die Planung des weiteren Verhaltens des Fahrzeugs bzw. Roboters ausgewertet werden. Für diese Auswertung kommen insbesondere Machine Learning-Modelle zum Einsatz. Wird ein solches Modell mit einer endlichen Menge von Trainings-Beispielen mit hinreichender Variabilität trainiert und liefert es für diese Trainings-Beispiele zutreffende Ergebnisse, wird auf Grund der Kraft zur Verallgemeinerung von Machine Learning-Modellen davon ausgegangen, dass das Machine Learning-Modell auch zur zutreffenden Auswertung ungesehener Daten in der Lage ist.

Eine vorgegebene Menge von Trainings-Beispielen kann insbesondere beispielsweise für das Training genutzt werden, indem anhand eines Teils der Trainings-Beispiele das Machine Learning-Modell optimiert wird. Ein anderer Teil der Trainings-Beispiele kann während dieser Optimierung zurückgehalten werden und nach Abschluss der Optimierung genutzt werden, um die Leistung des Machine Learning-Modells auf ungesehenen Messdaten zu ermitteln.

### Offenbarung der Erfindung

Die Erfindung stellt ein Verfahren zur Aufteilung einer vorgegebenen Menge von Messdaten-Records für das Training eines Machine Learning-Modells auf verschiedene vorgegebene Phasen dieses Trainings bereit. Jeder Messdaten-Record enthält Werte einer oder mehrerer Messgrößen. Hierbei ist der Begriff "Record" analog zur Verwendung des englischen Begriffs "record" zu sehen und bezeichnet eine Sammlung von Werten zusammenhängender Messgrößen und anderer Daten, vergleichbar mit dem Inhalt einer Karteikarte. Der intuitivere Begriff "Datensatz" ist im Sprachgebrauch auf dem Fachgebiet des Machine Learnings bereits belegt für eine Menge vieler Records, vergleichbar mit einem mit vielen Karteikarten gefüllten Karteikasten. Die Messdaten-Records können insbesondere beispielsweise Sensordaten enthalten, die mit Sensoren jedweder Art, wie beispielsweise Messinstrumenten für bestimmte Messgrößen, Kameras, Radar-Sensoren, Lidar-Sensoren oder Ultraschallsensoren, aufgenommen wurden.

Der Begriff "Machine Learning-Modell" bezeichnet insbesondere beispielsweise ein Modell, das eine mit anpassbaren Parametern parametrierte Funktion mit großer Kraft zur Verallgemeinerung verkörpert. Die Parameter können beim Training eines Machine Learning-Modells insbesondere dergestalt angepasst werden, dass bei Eingabe von Trainingsdaten in das Modell die zu den Trainingsdaten zugehörigen Soll-Ausgaben möglichst gut reproduziert werden. Ein Machine Learning-Modell kann insbesondere ein künstliches neuronales Netzwerk, KNN, beinhalten, und/oder es kann ein KNN sein.

Im Rahmen des Verfahrens wird eine Sequenz von Referenzpunkten, die einen Raum der Messdaten-Records abdecken und nicht mit Messdaten-Records zusammenfallen, ermittelt. Diese Abdeckung kann insbesondere beispielsweise eine gleichmäßige Abdeckung sein. Hierunter wird insbesondere beispielsweise verstanden, dass es im Raum der Messdaten-Records weder signifikante Häufungen von Referenzpunkten noch signifikante Bereiche, die frei von Referenzpunkten sind, gibt. Der Raum der Messdaten-Records kann insbesondere deutlich mehr Dimensionen aufweisen als die drei Dimensionen des kartesischen Raums. Insoweit kann dieser Raum als Hyperraum aufgefasst werden.

Für ein oder mehrere Messdaten-Records aus der vorgegebenen Menge von Messdaten-Records wird mit einem vorgegebenen Distanzmaß ermittelt, welchem Referenzpunkt dieser Messdaten-Record am nächsten liegt. Der Messdaten-Record wird dann diesem Referenzpunkt zugeordnet. Einem Referenzpunkt können dann somit insbesondere beispielsweise ein oder mehrere Messdaten-Records zugeordnet sein, wobei es durchaus zulässig ist, dass
- ein oder mehrere Messdaten-Records keinem Referenzpunkt zugeordnet sind und/oder
- einem oder mehreren Referenzpunkten kein Messdaten-Record zugeordnet ist.

Das Distanzmaß kann insbesondere beispielsweise ein euklidisches Distanzmaß sein. Es kann aber auch jedes andere Distanzmaß verwendet werden, beispielsweise eine 1-Norm.

Die Referenzpunkte werden auf die vorgegebenen Phasen des Trainings aufgeteilt, so dass jeder Phase des Trainings ein oder mehrere Referenzpunkte zugeordnet werden. Derjenigen Phase des Trainings, der jeder Referenzpunkt zugeordnet ist, werden auch die diesem Referenzpunkt zugeordneten Messdaten-Records zugeordnet. Bildlich gesprochen, erhält jeder Referenzpunkt bei der Aufteilung auf die Phasen des Trainings eine Farbe, und diese Farbe nehmen auch alle Messdaten-Records an, die dem jeweiligen Referenzpunkt zugeordnet sind.

Es wurde erkannt, dass auf diese Weise zueinander ähnliche Messdaten-Records, die somit im Raum der Messdaten-Records nahe beieinander liegen, bevorzugt dem gleichen Referenzpunkt zugeordnet werden. Damit werden diese Messdaten-Records auch der gleichen Phase des Trainings zugeordnet. Unabhängig von der konkreten Ausgestaltung des Machine Learning-Modells und davon, ob das Training überwacht oder unüberwacht erfolgt, kann das Training insbesondere beispielsweise
- mindestens eine Optimierungsphase, in der Parameter, die das Verhalten des zu trainierenden Machine Learning-Modells charakterisieren, optimiert werden, und
- mindestens eine Testphase, in der der Erfolg der Optimierungsphase kontrolliert wird,
umfassen. Hierunter fällt auch beispielsweise die "k-fache Kreuzvalidierung", bei der die Menge der verfügbaren Messdaten-Records in k gleiche Anteile aufgeteilt wird. Hierbei wird dann im Wechsel immer einer der Anteile i=1 ,...,k für die Testphase und der Rest der Messdaten-Records für die Optimierungsphase genutzt. Im üblichen Sprachgebrauch auf dem Gebiet des Machine Learnings wird die Optimierungsphase üblicherweise als "Training" bezeichnet. Im Kontext der vorliegenden Erfindung ist es jedoch zielführender, das Training als Einheit aus Optimierung und späterem Test zu verstehen.

Mit der Unterteilung des Trainings in Optimierungs- und Testphase wird insbesondere das Ziel verfolgt, der Tendenz zum sogenannten "Overfitting" entgegenzuwirken. Insbesondere dann, wenn in Relation zur Größe und Komplexität der Architektur des Machine Learning-Modells nur vergleichsweise wenige Messdaten-Records zur Verfügung stehen, kann das Machine Learning-Modell in der Optimierungsphase einen Weg des geringsten Widerstands gehen und sich in einer Weise optimieren, dass dies näher an einem "Auswendiglernen" der vorgelegten Messdaten-Records ist als an einer Extraktion des hierin verkörperten allgemeingültigen Wissens. Der Test an in der Optimierungsphase ungesehenen Messdaten-Records soll insbesondere feststellen, ob das trainierte Machine Learning-Modell wirklich verallgemeinern kann oder eben nur "auswendig gelernt" hat ohne Kraft zur Verallgemeinerung. Damit der Test in dieser Hinsicht aussagekräftig ist, müssen sich die in der Optimierungsphase einerseits und in der Testphase andererseits vorgelegten Messdaten-Records andererseits in hinreichendem Maße voneinander unterscheiden. Wenn in beiden Phasen im Wesentlichen die gleichen Messdaten-Records vorgelegt werden, kann das trainierte Machine Learning-Modell den Test auch dann mit gutem Ergebnis bestehen, wenn es nur "auswendig gelernt" hat.

Indem nun gleiche oder ähnliche Messdaten-Records bevorzugt für die gleiche Phase des Trainings vorgesehen werden, wird es zugleich begünstigt, dass sich in den unterschiedlichen Phasen des Trainings unterschiedliche Messdaten-Records ansiedeln. Damit kann das Machine Learning-Modell mit bloßem "Auswendiglernen" kein gutes Testergebnis mehr erreichen. Der beim Test gemessene Fehler ist also aussagekräftig für die Fähigkeit des trainierten Machine Learning-Modells zur Verallgemeinerung.

Die so gemessene Fähigkeit wiederum ist ein wesentliches Kriterium dafür, dass das trainierte Machine Learning-Modell in der konkreten Anwendung für die Steuerung technischer Systeme, wie etwa von Fahrzeugen oder Robotern, eingesetzt werden kann. Ein gutes Testergebnis ist in etwa vergleichbar mit der nach bestandener Hauptuntersuchung erteilten Plakette, mit der ein Fahrzeug für den Einsatz im Straßenverkehr freigegeben wird. Der Test, und somit auch die dem Test vorausgehende Aufteilung der insgesamt verfügbaren Messdaten-Records auf die verschiedenen Phasen des Trainings, ist somit keine bloße mathematische Aufteilung von Elementen in verschiedene Mengen als solche, sondern ein unverzichtbarer Teil des Gesamtprozesses, der mit der Bereitstellung der vorgegebenen Menge von Messdaten beginnt und in den Einsatz des fertigen Machine Learning-Modells in der konkreten technischen Anwendung mündet.

Die Messdaten-Records können optional mit Soll-Ausgaben ("Labels") annotiert sein, die das trainierte Machine Learning-Modell idealerweise liefern sollte, wenn ihm der jeweilige Messdaten-Record vorgelegt wird. Das Training kann dann als "überwachtes" Training in dem Sinne geführt werden, dass Abweichungen der Ausgabe des Machine Learning-Modells von der jeweiligen Soll-Ausgabe als Fehler gewertet und ggfs. als Feedback für eine weitere Optimierung genutzt werden. Da das "Labeln" von Messdaten-Records häufig ein manueller und kostenintensiver Prozess ist, sind "gelabelte" Messdaten-Records für das überwachte Training in vielen Anwendungen eine knappe Ressource. Labels können sich auf einzelne Messdaten-Records, aber auch beispielsweise auf Trajektorien-Abschnitte einer Zeitreihe von Messdaten-Records beziehen. Zwischen die Optimierungsphase und die Testphase kann optional beispielsweise noch eine Validierungsphase geschaltet sein. So kann beispielsweise die Optimierungsphase mit mehreren verschiedenen Hyperparametern, die etwa die Topologie und/oder Größe des Machine Learning-Modells oder die Optimierungsstrategie festlegen, wiederholt werden, und es kann in der Validierungsphase jeweils geprüft werden, wie sich die Änderung der Hyperparameter auf die Leistung des Machine Learning-Modells auswirkt. Das hierbei final trainierte Machine Learning-Modell kann abschließend in der Testphase mit wiederum anderen Daten geprüft und für den Einsatz freigegeben werden.

Besonders vorteilhaft wird jeder Messdaten-Record aus der vorgegebenen Menge von Messdaten-Records einem Referenzpunkt zugeordnet. Der verfügbare Vorrat von Messdaten-Records wird dann vollständig auf die verschiedenen Phasen des Trainings aufgeteilt und somit optimal ausgenutzt.

Die vorgegebene Menge von Messdaten-Records kann insbesondere beispielsweise eine Zeitreihe oder Sequenz bilden. Aus der Zeitreihe bzw. Sequenz gehen dann jeweils bereits Anhaltspunkte dahingehend hervor, welche Messdaten-Records ähnlich sind und somit der gleichen Phase des Trainings zugeordnet werden sollte.

Wenn die Messdaten-Records eine Zeitreihe bilden, können insbesondere beispielsweise Messdaten-Records in einem Vorverarbeitungsschritt um eine oder mehrere weitere Komponenten erweitert werden, die eine Historie der Zeitreihe angeben. Die Sequenz von Referenzpunkten kann dann in dem Raum der solchermaßen erweiterten Messdaten-Records ermittelt werden. Eine weitere Komponente, die eine Historie der Zeitreihe angibt, kann beispielsweise aus einer tiefpassgefilterten Zeitreihe einer oder mehrerer Messgrößen hervorgehen. Auf diese Weise können beispielsweise zum Ermitteln der Ausgabe des Machine Learning-Modells nur die Messdaten-Records innerhalb eines bestimmten zurückliegenden Zeithorizonts berücksichtigt werden, während noch weiter zurückliegende Messdaten-Records unberücksichtigt bleiben.

Wenn die Messdaten-Records eine Sequenz bilden, die anders als eine Zeitreihe nur eine Reihenfolge der Aufnahme der Messdaten-Records angibt und nicht mit Zeitangaben annotiert sein muss, wird in einer weiteren vorteilhaften Ausgestaltung bei der Zuordnung von Messdaten-Records zu Referenzpunkten eine Zuordnung von in der Sequenz von Records aufeinander folgenden Records zu ein und demselben Referenzpunkt begünstigt. Wenn beispielsweise entsprechend einem Versuchsplan Messdaten erfasst werden, ist dieser Versuchsplan in der Regel darauf abgestimmt, eine bestimmte Abfolge für eine effiziente Messung auszunutzen. Ein derartiger Versuchsplan umfasst in sehr vielen Fällen auch stationäre Phasen, in denen aufeinander folgende Messdaten-Records zueinander ähnlicher sind als in der Sequenz weiter auseinander liegende Messdaten-Records. Eine Ähnlichkeit auf diese Weise zu ermitteln kann effizienter sein als eine Vielzahl von Abständen zu Referenzpunkten in einem vieldimensionalen Raum direkt auszurechnen.

In einer weiteren besonders vorteilhaften Ausgestaltung werden Abschnitte der Zeitreihe, deren Messdaten-Records jeweils am nächsten zu einem Referenzpunkt liegen, diesem Referenzpunkt zugeordnet. Auf diese Weise kann eine Zeitreihe von Messdaten-Records in unterschiedliche Anteile für die Verwendung in unterschiedlichen Phasen des Trainings aufgeteilt werden, wobei innerhalb dieser Anteile die jeweiligen Messdaten-Records immer noch in der richtigen Reihenfolge stehen. Hiermit kann insbesondere ein transientes Systemverhalten modelliert werden, bei dem der durch das Machine Learning-Modell vorherzusagende Wert einer interessierenden Größe zum Zeitpunkt t von dem Verlauf (der Historie) der Messdaten-Records in einem zurückliegenden Zeithorizont vor dem Zeitpunkt t abhängt.

Hierbei können vorteilhaft nur Abschnitte der Zeitreihe, die eine in Zeit und/oder in der Anzahl von Messdaten-Records bemessene vorgegebene Mindestlänge aufweisen, einem Referenzpunkt zugeordnet werden, und/oder einer Phase des Trainings zugeordnet werden. Zu kurze Abschnitte können also bereits bei der Zuordnung von Messdaten-Records zu Referenzpunkten aussortiert werden, aber auch erst bei der Zuordnung von Messdaten-Records zu Phasen des Trainings. Die geforderte Mindestlänge kann insbesondere beispielsweise anhand einer Zeitkonstanten ermittelt werden, mit der das jeweils betrachtete technische System auf in den Messdaten-Records verkörperte Änderungen seiner Betriebsbedingungen reagiert.

In einer weiteren besonders vorteilhaften Ausgestaltung werden nur Messdaten-Records aus einer den Raum der Messdaten-Records abdeckenden Teilmenge (space-filling subset, SFS) der vorgegebenen Menge von Messdaten-Records Referenzpunkten zugeordnet. Auf diese Weise kann die Menge von Messdaten-Records auf das Wesentliche reduziert werden, das das Verhalten des über die Messdaten beobachteten technischen Systems charakterisiert. Dabei kann insbesondere beispielsweise eine bereits existierende SFS auf die verschiedenen Phasen des Trainings aufgeteilt werden. Es kann aber auch beispielsweise eine SFS in ein und demselben Arbeitsgang sowohl neu erzeugt als auch auf die verschiedenen Phasen des Trainings aufgeteilt werden.

Zu diesem Zweck kann insbesondere beispielsweise jedem Referenzpunkt entweder kein Messdaten-Record oder der diesem Referenzpunkt am nächsten gelegene Messdaten-Record zugeordnet werden. Es kann dann also durchaus Referenzpunkte geben, die ohne zugeordneten Messdaten-Record bleiben.

In einer besonders vorteilhaften Ausgestaltung wird eine zufällige oder pseudo-zufällige Sequenz von Referenzpunkten im Raum der Messdaten-Records ermittelt. Auf diese Weise haben die Referenzpunkte unregelmäßige Abstände voneinander, so dass, anders als beim Auskleiden des Raums mit einem regelmäßigen Gitter, keine Artefakte durch die Regelmäßigkeit dieses Gitters induziert werden.

Besonders vorteilhaft wird eine Sobol-Sequenz als Sequenz von Referenzpunkten ermittelt. Eine solche Sequenz zeichnet sich dadurch aus, dass spätere Referenzpunkte in den Lücken zwischen früheren Referenzpunkten liegen. Je weiter somit die Sequenz voranschreitet, desto dichter wird der Raum progressiv abgedeckt.

In einer weiteren besonders vorteilhaften Ausgestaltung wird die Sequenz von Referenzpunkten abschnittsweise auf die vorgegebenen Phasen des Trainings aufgeteilt. Insbesondere im Zusammenhang mit einer Sobol-Sequenz als Sequenz von Referenzpunkten hat dies den Vorteil, dass jeder der Abschnitte wiederum eine raumfüllende Sequenz bildet. Wenn also beispielsweise die Sequenz von Referenzpunkten M Referenzpunkte aufweist, können etwa die ersten p Referenzpunkte einer Optimierungsphase des Trainings und die übrigen (1-p) Referenzpunkte einer Testphase des Trainings zugeordnet werden.

In einer weiteren besonders vorteilhaften Ausgestaltung werden die Messdaten-Records in einem Vorverarbeitungsschritt in einen Hyperwürfel, in dem alle Koordinaten Werte im gleichen Wertebereich (etwa zwischen 0 und 1) annehmen, skaliert. Auf diese Weise werden bei der Berechnung des Distanzmaßes, das über die Zuordnung von Messdaten-Records zu Referenzpunkten entscheidet, alle in den Messdaten-Records vorkommenden Messgrößen unabhängig von der Größenordnung ihrer Werte gleich behandelt. Es kann also keine Messgröße allein auf Grund der Tatsache, dass sich all ihre Messwerte in einer absolut besonders großen Größenordnung bewegen, eine besonders große Bedeutung im Distanzmaß bekommen, bzw. allein auf Grund der Tatsache, dass sich all ihre Messwerte in einer absolut besonders kleinen Größenordnung bewegen, aus dem Distanzmaß im Wesentlichen herausfallen. Ansonsten würde die Bedeutung der einzelnen Messgrößen von der Wahl der Maßeinheit (etwa Ohm oder Kiloohm, Volt oder Millivolt) abhängen.

In einer weiteren besonders vorteilhaften Ausgestaltung wird das Machine Learning-Modell in den vorgegebenen Phasen des Trainings unter Nutzung der diesen Phasen jeweils zugeordneten Messdaten-Records trainiert. Auf diese Weise manifestiert sich die verbesserte Aufteilung der Messdaten-Records auf die Phasen des Trainings in einem Trainingserfolg, der eine bessere Kraft zur Verallgemeinerung auf im Training ungesehene Daten verspricht.

In einer weiteren besonders vorteilhaften Ausgestaltung werden dem auf diese Weise trainierten Machine Learning-Modell weitere Messdaten-Records, die mit mindestens einem Sensor aufgenommen wurden, zugeführt. Aus der Ausgabe des Machine Learning-Modells wird ein Ansteuersignal ermittelt. Ein Fahrzeug, ein Fahrassistenzsystem, ein Roboter, ein System zur Qualitätskontrolle, ein System zur Überwachung von Bereichen, und/oder ein System zur medizinischen Bildgebung, wird mit dem Ansteuersignal angesteuert. Auf diese Weise ist die Wahrscheinlichkeit, dass die Reaktion des jeweils angesteuerten technischen Systems auf das Ansteuersignal der in den weiteren Messdaten-Records verkörperten Situation angemessen ist, auf Grund der verbesserten Kraft des Machine Learning-Modells zur Verallgemeinerung vorteilhaft erhöht.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Aufteilung einer vorgegebenen Menge von Messdaten-Records 2 auf verschiedene vorgegebene Phasen 1a, 1b, 1c des Trainings eines Machine Learning-Modells 1;
Figur 2 Vollständige Aufteilung einer Menge von Messdaten-Records 2 auf eine Optimierungsphase 1a und eine Testphase 1c des Trainings;
Figur 3 Aufteilung nur eines space-filling subset, SFS, einer Menge von Messdaten-Records 2 auf eine Optimierungsphase 1a und eine Testphase 1c des Trainings.

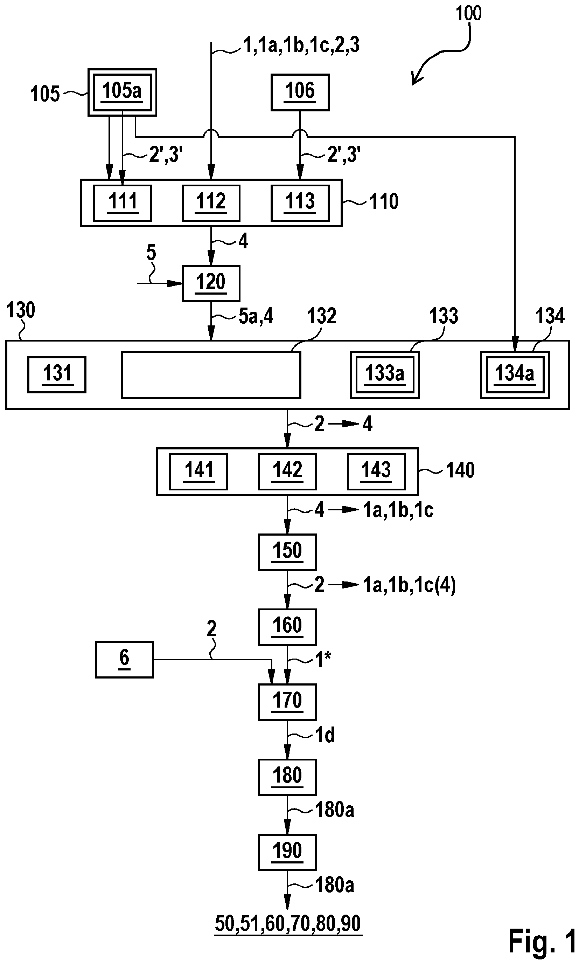

Figur 1 ist ein schematisches Ablaufdiagramm eines Ausführungsbeispiels des Verfahrens 100 zur Aufteilung einer vorgegebenen Menge von Messdaten-Records 2 für das Training eines Machine Learning-Modells 1 auf verschiedene vorgegebene Phasen 1a, 1b, 1c dieses Trainings. Jeder Messdaten-Record 2 enthält Werte einer oder mehrerer Messgrößen. Die Messdaten-Records gehören einem Raum 3 an.

Gemäß Block 105 kann die die vorgegebene Menge von Messdaten-Records 2 eine Zeitreihe und/oder Sequenz bilden. Die Messdaten-Records 2 können dann beispielsweise gemäß Block 105a in einem Vorverarbeitungsschritt um eine oder mehrere weitere Komponenten erweitert werden, die eine Historie der Zeitreihe angeben. Die solchermaßen erweiterten Messdaten-Records 2' gehören einem neuen Raum 3' an.

Gemäß Block 106 können die Messdaten-Records 2 in einem Vorverarbeitungsschritt in einen Hyperwürfel skaliert werden, in dem alle Koordinaten Werte im gleichen Wertebereich annehmen. Auch hierbei entstehen modifizierte Messdaten-Records 2' in einem neuen Raum 3', der jedoch die gleiche Dimensionalität aufweist wie der ursprüngliche Raum 3.

In Schritt 110 wird eine Sequenz von Referenzpunkten 4, die einen Raum 3 der Messdaten-Records 2 abdecken und nicht mit Messdaten-Records 2 zusammenfallen, ermittelt.

Insofern die Messdaten-Records 2 gemäß Block 105 zu erweiterten Messdaten-Records 2' in einem Raum 3' aufgewertet wurden, kann gemäß Block 111 die Sequenz von Referenzpunkten 4 in diesem Raum 3' ermittelt werden.

Gemäß Block 112 kann eine zufällige oder pseudo-zufällige Sequenz von Referenzpunkten 4 im Raum 3 der Messdaten-Records 2 ermittelt werden. Es kann insbesondere beispielsweise gemäß Block 113 eine Sobol-Sequenz als Sequenz von Referenzpunkten 4 ermittelt werden.

In Schritt 120 wird für ein oder mehrere Messdaten-Records 2 aus der vorgegebenen Menge von Messdaten-Records 2 mit einem vorgegebenen Distanzmaß 5 ermittelt, welchem Referenzpunkt 4 dieser Messdaten-Record 2 am nächsten liegt. Es entstehen Distanzen 5a und dementsprechend nächste Referenzpunkte 4. In Schritt 130 wird der Messdaten-Record 2 dem jeweils nächsten Referenzpunkt 4 zugeordnet.

Gemäß Block 131 kann jeder Messdaten-Record 2 aus der vorgegebenen Menge von Messdaten-Records 2 einem Referenzpunkt 4 zugeordnet werden.

Gemäß Block 132 kann bei der Zuordnung von Messdaten-Records 2 zu Referenzpunkten 4 eine Zuordnung von in der Sequenz von Messdaten-Records 2 aufeinander folgenden Messdaten-Records 2 zu ein und demselben Referenzpunkt 4 begünstigt werden.

Gemäß Block 133 können beispielsweise nur Messdaten-Records 2 aus einer den Raum 3 der Messdaten-Records 2 abdeckenden Teilmenge, SFS, der vorgegebenen Menge von Messdaten-Records 2 Referenzpunkten 4 zugeordnet werden.

Insofern gemäß Block 105 eine Zeitreihe von Messdaten-Records 2 vorliegt, können gemäß Block 134 Abschnitte der Zeitreihe, deren Messdaten-Records 2 jeweils am nächsten zu einem Referenzpunkt 4 liegen, diesem Referenzpunkt 4 zugeordnet werden. Es können dann insbesondere beispielsweise gemäß Block 134a nur Abschnitte der Zeitreihe, die eine in Zeit und/oder in der Anzahl von

Messdaten-Records 2 bemessene vorgegebene Mindestlänge aufweisen, einem Referenzpunkt 4 zugeordnet werden.

In Schritt 140 werden die Referenzpunkte 4 auf die vorgegebenen Phasen 1a, 1b, 1c des Trainings aufgeteilt, so dass jeder Phase 1a, 1b, 1c des Trainings ein oder mehrere Referenzpunkte 4 zugeordnet werden.

Wenn gemäß Block 134 Abschnitte der Zeitreihe, deren Messdaten-Records 2 jeweils am nächsten zu einem Referenzpunkt 4 liegen, diesem Referenzpunkt 4 zugeordnet werden, können gemäß Block 141 beispielsweise nur Abschnitte der Zeitreihe, die eine in Zeit und/oder in der Anzahl von Messdaten-Records 2 bemessene vorgegebene Mindestlänge aufweisen, einer Phase 1a, 1b, 1c des Trainings zugeordnet werden.

Gemäß Block 142 kann die Sequenz von Referenzpunkten 4 abschnittsweise auf die vorgegebenen Phasen 1a, 1b, 1c des Trainings aufgeteilt werden.

Gemäß Block 143 können
- mindestens eine Optimierungsphase 1a, in der Parameter, die das Verhalten des zu trainierenden Machine Learning-Modells 1 charakterisieren, optimiert werden, und
- mindestens eine Testphase 1c, in der der Erfolg der Optimierungsphase 1a kontrolliert wird,
als Phasen 1a, 1b, 1c des Trainings gewählt werden. Dazwischen kann beispielsweise eine Validierungsphase 1b stattfinden, mit deren Hilfe, wie zuvor erläutert, beispielsweise die Abhängigkeit der Leistung des Machine Learning-Modells 1 von Hyperparametern untersucht werden kann.

In Schritt 150 werden derjenigen Phase 1a, 1b, 1c des Trainings, der jeder Referenzpunkt 4 zugeordnet ist, werden auch die diesem Referenzpunkt 4 zugeordneten Messdaten-Records 2 zugeordnet.

In dem in Figur 1 gezeigten Beispiel wird in Schritt 160 das Machine Learning-Modell 1 in den vorgegebenen Phasen 1a, 1b, 1c des Trainings unter Nutzung der diesen Phasen 1a, 1b, 1c jeweils zugeordneten Messdaten-Records 2 trainiert. Der fertig trainierte Zustand des Machine Learning-Modells ist mit dem Bezugszeichen 1* bezeichnet.

In dem in Figur 1 gezeigten Beispiel werden weiterhin in Schritt 170 dem trainierten Machine Learning-Modell 1* weitere Messdaten-Records 2, die mit mindestens einem Sensor 6 aufgenommen wurden, zugeführt. Hierbei liefert das trainierte Machine Learning-Modell 1* eine Ausgabe 1d. Aus dieser Ausgabe 1d wird in Schritt 180 ein Ansteuersignal 1d ermittelt. In Schritt 190 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 180a angesteuert.

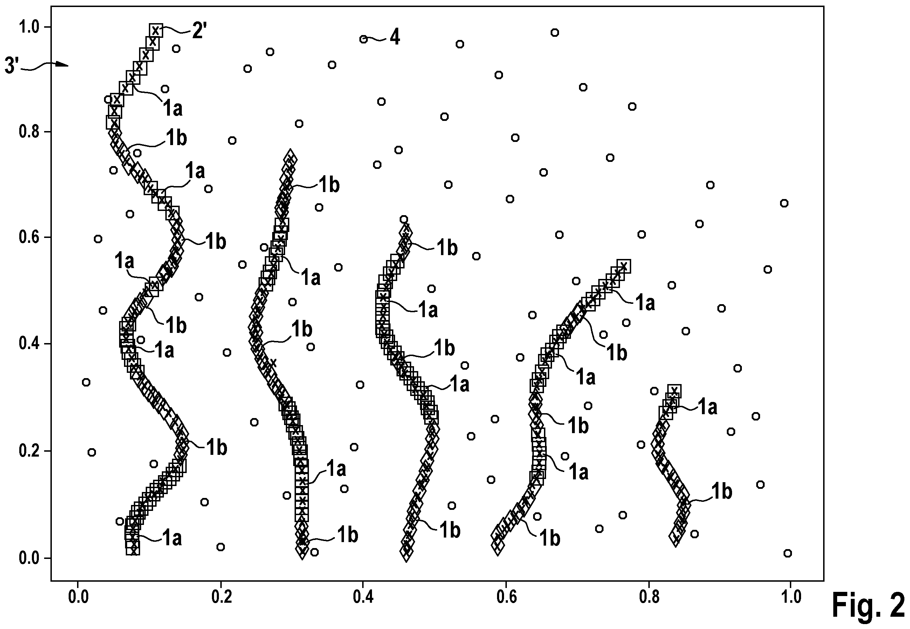

Figur 2 veranschaulicht, wie eine vorgegebene Menge von Messdaten-Records 2 vollständig auf eine Optimierungsphase 1a und eine Testphase 1c des Trainings aufgeteilt werden kann.

In dem in Figur 2 gezeigten Beispiel sind die Messdaten-Records 2 in einen (hier: zweidimensionalen) Einheitswürfel skaliert, in dem beide Koordinaten nur Werte zwischen 0 und 1 annehmen können. Hierdurch sind modifizierte Messdaten-Records 2' in einem neuen Raum 3' entstanden, der die gleiche Dimensionalität hat wie der ursprüngliche Raum 3.

Die Referenzpunkte 4 im Raum 3' sind auf die hier zwei Phasen 1a (Optimierungsphase) und 1b (Testphase) des Trainings aufgeteilt worden. Hierzu wurde ein Abschnitt der Sequenz von Referenzpunkten 4 der Optimierungsphase 1a und der Rest der Sequenz der Testphase 1b zugeschrieben. Da es sich bei der Sequenz von Referenzpunkten 4 um eine Sobol-Sequenz handelt, gibt es im Raum 3' keine Häufungen von Referenzpunkten 4, die zur Optimierungsphase 1a gehören, oder von Referenzpunkten 4, die zur Testphase 1b gehören. Stattdessen liegt eine quasi-zufällige Durchmischung dieser beiden Kategorien von Referenzpunkten 4 vor, wobei die Unterscheidung in Figur 2 der Übersichtlichkeit halber nicht eingezeichnet ist.

Die Messdaten-Records 2 werden in Abhängigkeit davon, ob sie einem zur Optimierungsphase 1a oder aber zur Testphase 1b gehörenden Referenzpunkt 4 am nächsten liegen, der Optimierungsphase 1a oder der Testphase 1b zugeordnet. Daher wechselt die Sequenz oder Zeitreihe der Messdaten-Records 2 in pseudo-zufälliger Weise zwischen der Optimierungsphase 1a und der Testphase 1b hin und her. Dabei entstehen jedoch immer gewisse Abschnitte verschiedener Längen, die nur der Optimierungsphase 1a, bzw. nur der Testphase 1b, angehören. Gerade Anwendungen, in denen es um Zeitreihen von Messdaten-Records 2 geht, benötigen Abschnitte einer solchen Zeitreihe, die zumindest lang genug sind, damit sich die zu studierenden Phänomene während der jeweiligen Abschnitte manifestieren können.

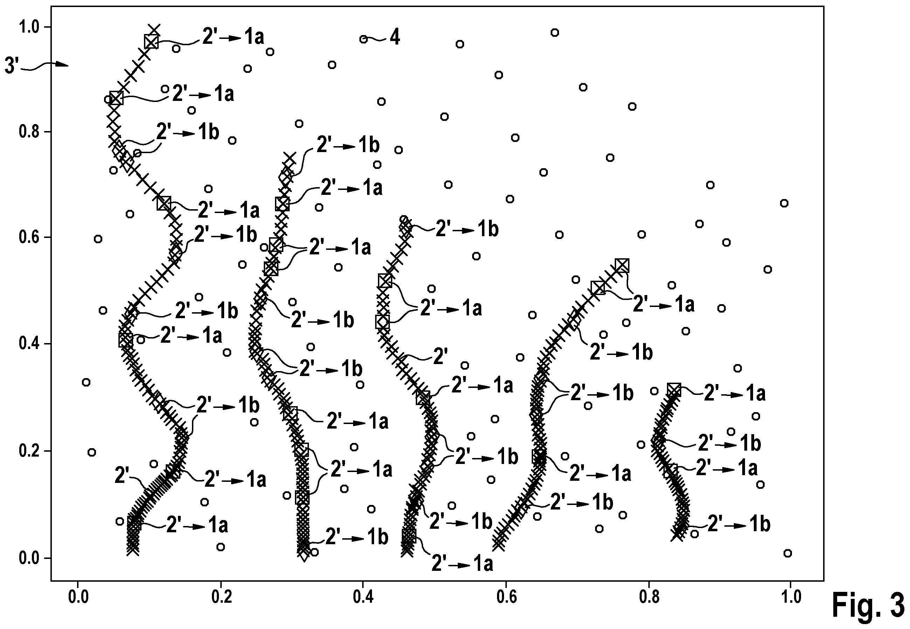

Figur 3 illustriert am Beispiel der gleichen Menge von Messdaten-Records 2, wie ein space-filling subset, SFS, dieser Menge von Messdaten-Records 2 auf eine Optimierungsphase 1a und eine Testphase 1c des Trainings aufgeteilt werden kann.

Auch in Figur 3 sind durch Umskalieren der Messdaten-Records 2 in den Einheitswürfel wieder modifizierte Messdaten-Records 2' in einem Einheitswürfel, in dem beide Koordinaten nur Werte zwischen 0 und 1 annehmen können, entstanden. Der neue Raum 3', in dem sich diese modifizierten modifizierte Messdaten-Records 2' befinden, hat die gleiche Dimensionalität wie der ursprüngliche Raum 3.

Im Unterschied zu Figur 2 sind nur einzelne Messdaten-Records 2' der Optimierungsphase 1a, bzw. der Testphase 1b, zugeordnet. Diese Messdaten-Records 2' gehören zu einem bereits vorher anhand der gleichen Referenzpunkte 4, aber ansonsten auf beliebige Weise ermittelten, space-filling subset, SFS. Wie die in Figur 2 ermittelten Abschnitte einer Sequenz von Messdaten-Records 2' wechseln auch diese individuellen Messdaten-Records 2' in quasi-zufälliger Weise zwischen der Optimierungsphase 1a und der Testphase 1b hin und her.

## Patentansprüche

1. Verfahren (100) zur Aufteilung einer vorgegebenen Menge von Messdaten-Records (2) für das Training eines Machine Learning-Modells (1) auf verschiedene vorgegebene Phasen (1a, 1b, 1c) dieses Trainings, wobei jeder Messdaten-Record (2) Werte einer oder mehrerer Messgrößen enthält, mit den Schritten:
• es wird eine Sequenz von Referenzpunkten (4), die einen Raum (3) der Messdaten-Records (2) abdecken und nicht mit Messdaten-Records (2) zusammenfallen, ermittelt (110);
• für ein oder mehrere Messdaten-Records (2) aus der vorgegebenen Menge von Messdaten-Records (2) wird mit einem vorgegebenen Distanzmaß (5) ermittelt (120), welchem Referenzpunkt (4) dieser Messdaten-Record (2) am nächsten liegt, und der Messdaten-Record (2) wird diesem Referenzpunkt (4) zugeordnet (130);
• die Referenzpunkte (4) werden auf die vorgegebenen Phasen (1a, 1b, 1c) des Trainings aufgeteilt (140), so dass jeder Phase (1a, 1b, 1c) des Trainings ein oder mehrere Referenzpunkte (4) zugeordnet werden;
• derjenigen Phase (1a, 1b, 1c) des Trainings, der jeder Referenzpunkt (4) zugeordnet ist, werden auch die diesem Referenzpunkt (4) zugeordneten Messdaten-Records (2) zugeordnet (150).

2. Verfahren (100) nach Anspruch 1, wobei jeder Messdaten-Record (2) aus der vorgegebenen Menge von Messdaten-Records (2) einem Referenzpunkt (4) zugeordnet wird (131).

3. Verfahren (100) nach einem der Ansprüche 1 bis 2, wobei die vorgegebene Menge von Messdaten-Records (2) eine Zeitreihe und/oder Sequenz bildet (105).

4. Verfahren (100) nach Anspruch 3, wobei bei der Zuordnung von Messdaten-Records (2) zu Referenzpunkten (4) eine Zuordnung von in der Sequenz von Messdaten-Records (2) aufeinander folgenden Messdaten-Records (2) zu ein und demselben Referenzpunkt (4) begünstigt wird (132).

5. Verfahren (100) nach einem der Ansprüche 3 bis 4, wobei
• Messdaten-Records (2) in einem Vorverarbeitungsschritt um eine oder mehrere weitere Komponenten erweitert werden (105a), die eine Historie der Zeitreihe angeben, und
• die Sequenz von Referenzpunkten (4) in dem Raum (3') der solchermaßen erweiterten Messdaten-Records (2') ermittelt wird (111).

6. Verfahren (100) nach Anspruch 3, wobei Abschnitte der Zeitreihe, deren Messdaten-Records (2) jeweils am nächsten zu einem Referenzpunkt (4) liegen, diesem Referenzpunkt (4) zugeordnet werden (134).

7. Verfahren (100) nach Anspruch 6, wobei nur Abschnitte der Zeitreihe, die eine in Zeit und/oder in der Anzahl von Messdaten-Records (2) bemessene vorgegebene Mindestlänge aufweisen, einem Referenzpunkt (4) zugeordnet werden (134a), und/oder einer Phase (1a, 1b, 1c) des Trainings zugeordnet werden (141).

8. Verfahren (100) nach Anspruch 1, wobei nur Messdaten-Records (2) aus einer den Raum (3) der Messdaten-Records (2) abdeckenden Teilmenge, SFS, der vorgegebenen Menge von Messdaten-Records (2) Referenzpunkten (4) zugeordnet werden (133).

9. Verfahren (100) nach Anspruch 8, wobei jedem Referenzpunkt (4) entweder kein Messdaten-Record (2) oder der diesem Referenzpunkt (4) am nächsten gelegene Messdaten-Record (2) zugeordnet wird (133a).

10. Verfahren (100) nach einem der Ansprüche 1 bis 9, wobei eine zufällige oder pseudo-zufällige Sequenz von Referenzpunkten (4) im Raum (3) der Messdaten-Records (2) ermittelt wird (112).

11. Verfahren (100) nach einem der Ansprüche 1 bis 10, wobei eine Sobol-Sequenz als Sequenz von Referenzpunkten (4) ermittelt wird (113).

12. Verfahren (100) nach einem der Ansprüche 1 bis 11, wobei die Sequenz von Referenzpunkten (4) abschnittsweise auf die vorgegebenen Phasen (1a, 1b, 1c) des Trainings aufgeteilt wird (142).

13. Verfahren (100) nach einem der Ansprüche 1 bis 12, wobei die Messdaten-Records (2) in einem Vorverarbeitungsschritt in einen Hyperwürfel skaliert werden (106), in dem alle Koordinaten Werte im gleichen Wertebereich annehmen.

14. Verfahren (100) nach einem der Ansprüche 1 bis 13, wobei
• mindestens eine Optimierungsphase (1a), in der Parameter, die das Verhalten des zu trainierenden Machine Learning-Modells (1) charakterisieren, optimiert werden, und
• mindestens eine Testphase (1c), in der der Erfolg der Optimierungsphase (1a) kontrolliert wird,
als Phasen (1a, 1b, 1c) des Trainings gewählt werden (143).

15. Verfahren (100) nach einem der Ansprüche 1 bis 14, wobei das Machine Learning-Modell (1) in den vorgegebenen Phasen (1a, 1b, 1c) des Trainings unter Nutzung der diesen Phasen (1a, 1b, 1c) jeweils zugeordneten Messdaten-Records (2) trainiert wird (160).

16. Verfahren (100) nach Anspruch 15, wobei
• dem trainierten Machine Learning-Modell (1*) weitere Messdaten-Records (2), die mit mindestens einem Sensor (6) aufgenommen wurden, zugeführt werden (170),
• aus der Ausgabe (1d) des Machine Learning-Modells (1) ein Ansteuersignal (180a) ermittelt wird (180), und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (180a) angesteuert wird (190).

17. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 16 auszuführen.

18. Maschinenlesbarer Datenträger und/oder Downloadprodukt mit dem Computerprogramm nach Anspruch 17.

19. Ein oder mehrere Computer und/oder Compute-Instanzen mit dem Computerprogramm nach Anspruch 17, und/oder mit dem maschinenlesbaren Datenträger und/oder Downloadprodukt nach Anspruch 18.

## Geänderte Patentansprüche

### Geänderte Patentansprüche gemäss Regel 137(2) EPÜ.

1. Verfahren (100) zur Aufteilung einer vorgegebenen Menge von Messdaten-Records (2) für das Training eines Machine Learning-Modells (1) auf verschiedene vorgegebene Phasen (1a, 1b, 1c) dieses Trainings, wobei jeder Messdaten-Record (2) Werte einer oder mehrerer Messgrößen enthält, mit den Schritten:
• es wird eine Sequenz von Referenzpunkten (4), die einen Raum (3) der Messdaten-Records (2) abdecken und nicht mit Messdaten-Records (2) zusammenfallen, ermittelt (110);
• für ein oder mehrere Messdaten-Records (2) aus der vorgegebenen Menge von Messdaten-Records (2) wird mit einem vorgegebenen Distanzmaß (5) ermittelt (120), welchem Referenz punkt (4) dieser Messdaten-Record (2) am nächsten liegt, und der Messdaten-Record (2) wird diesem Referenzpunkt (4) zugeordnet (130);
• die Referenzpunkte (4) werden auf die vorgegebenen Phasen (1a, 1b, 1c) des Trainings aufgeteilt (140), so dass jeder Phase (1a, 1b, 1c) des Trainings ein oder mehrere Referenzpunkte (4) zugeordnet werden, wobei
∘ mindestens eine Optimierungsphase (1a), in der Parameter, die das Verhalten des zu trainierenden Machine Learning-Modells (1) charakterisieren, optimiert werden, und
∘ mindestens eine Testphase (1c), in der der Erfolg der Optimierungsphase (1a) kontrolliert wird,
als Phasen (1a, 1b, 1c) des Trainings gewählt werden (143);
• derjenigen Phase (1a, 1b, 1c) des Trainings, der jeder Referenzpunkt (4) zugeordnet ist, werden auch die diesem Referenzpunkt (4) zugeordneten Messdaten-Records (2) zugeordnet (150).

2. Verfahren (100) nach Anspruch 1, wobei jeder Messdaten-Record (2) aus der vorgegebenen Menge von Messdaten-Records (2) einem Referenzpunkt (4) zugeordnet wird (131).

3. Verfahren (100) nach einem der Ansprüche 1 bis 2, wobei die vorgegebene Menge von Messdaten-Records (2) eine Zeitreihe und/oder Sequenz bildet (105).

4. Verfahren (100) nach Anspruch 3, wobei bei der Zuordnung von Messdaten-Records (2) zu Referenzpunkten (4) eine Zuordnung von in der Sequenz von Messdaten-Records (2) aufeinander folgenden Messdaten-Records (2) zu ein und demselben Referenzpunkt (4) begünstigt wird (132).

5. Verfahren (100) nach einem der Ansprüche 3 bis 4, wobei
• Messdaten-Records (2) in einem Vorverarbeitungsschritt um eine oder mehrere weitere Komponenten erweitert werden (105a), die eine Historie der Zeitreihe angeben, und
• die Sequenz von Referenzpunkten (4) in dem Raum (3') der solchermaßen erweiterten Messdaten-Records (2') ermittelt wird (111).

6. Verfahren (100) nach Anspruch 3, wobei Abschnitte der Zeitreihe, deren Messdaten-Records (2) jeweils am nächsten zu einem Referenzpunkt (4) liegen, diesem Referenzpunkt (4) zugeordnet werden (134).

7. Verfahren (100) nach Anspruch 6, wobei nur Abschnitte der Zeitreihe, die eine in Zeit und/oder in der Anzahl von Messdaten-Records (2) bemessene vorgegebene Mindestlänge aufweisen, einem Referenzpunkt (4) zugeordnet werden (134a), und/oder einer Phase (1a, 1b, 1c) des Trainings zugeordnet werden (141).

8. Verfahren (100) nach Anspruch 1, wobei nur Messdaten-Records (2) aus einer den Raum (3) der Messdaten-Records (2) abdeckenden Teilmenge, SFS, der vorgegebenen Menge von Messdaten-Records (2) Referenzpunkten (4) zugeordnet werden (133).

9. Verfahren (100) nach Anspruch 8, wobei jedem Referenzpunkt (4) entweder kein Messdaten-Record (2) oder der diesem Referenzpunkt (4) am nächsten gelegene Messdaten-Record (2) zugeordnet wird (133a).

10. Verfahren (100) nach einem der Ansprüche 1 bis 9, wobei eine zufällige oder pseudo-zufällige Sequenz von Referenzpunkten (4) im Raum (3) der Messdaten-Records (2) ermittelt wird (112).

11. Verfahren (100) nach einem der Ansprüche 1 bis 10, wobei eine Sobol-Sequenz als Sequenz von Referenzpunkten (4) ermittelt wird (113).

12. Verfahren (100) nach einem der Ansprüche 1 bis 11, wobei die Sequenz von Referenzpunkten (4) abschnittsweise auf die vorgegebenen Phasen (1a, 1b, 1c) des Trainings aufgeteilt wird (142).

13. Verfahren (100) nach einem der Ansprüche 1 bis 12, wobei die Messdaten-Records (2) in einem Vorverarbeitungsschritt in einen Hyperwürfel skaliert werden (106), in dem alle Koordinaten Werte im gleichen Wertebereich annehmen.

14. Verfahren (100) nach einem der Ansprüche 1 bis 13, wobei das Machine Learning-Modell (1) in den vorgegebenen Phasen (1a, 1b, 1c) des Trainings unter Nutzung der diesen Phasen (1a, 1b, 1c) jeweils zugeordneten Messdaten-Records (2) trainiert wird (160).

15. Verfahren (100) nach Anspruch 14, wobei
• dem trainierten Machine Learning-Modell (1*) weitere Messdaten-Records (2), die mit mindestens einem Sensor (6) aufgenommen wurden, zugeführt werden (170),
• aus der Ausgabe (1d) des Machine Learning-Modells (1) ein Ansteuersignal (180a) ermittelt wird (180), und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (180a) angesteuert wird (190).

16. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 15 auszuführen.

17. Maschinenlesbarer Datenträger und/oder Downloadprodukt mit dem Computerprogramm nach Anspruch 16.

18. Ein oder mehrere Computer und/oder Compute-Instanzen mit dem Computerprogramm nach Anspruch 16, und/oder mit dem maschinenlesbaren Datenträger und/oder Downloadprodukt nach Anspruch 1
